# EUROPEAN PATENT APPLICATION

(11) **EP 2 853 822 A1**
(43) Date of publication of application: **01.04.2015**
(21) Application number: 13186152.8
(22) Date of filing: 26.09.2013
(51) Int. Cl.: F24D 19/10

(54) **Pumping system control**

(71) Applicant: ABB Oy, 00380 Helsinki (FI)
(72) Inventor: Tamminen, Jussi, 53850 Lappeenranta (FI); Ahonen, Tero, 53810 Lappeenranta (FI); Ahola, Jero, 53850 Lappeenranta (FI)
(74) Representative: Kolster Oy Ab

(57) **Abstract**

A method and a control arrangement configured to measure a total flow rate through a pump before a pump pressure or rotational speed change; change at least one of the following: the pump pressure by a predetermined pressure step or the pump rotational speed by a predetermined rotational speed step; measure a total flow rate through the pump after the pump pressure or rotational speed change; and determine a need for a further pump pressure or rotational speed change step on the basis of the total flow rate measurement carried out before and after the pump pressure change.

## Description

### BACKGROUND

The invention relates to pumping system control, and particularly to a control method and arrangement according to the preamble of the independent claims.

Pumping systems are common in household, industrial and municipal applications. The increased energy consciousness has brought to attention the amount of energy saving potential related to these systems. Variable-speed drives allowing rotational speed control of the pump have been introduced to improve the energy efficiency of the pumping system. However, the rotational speed control alone does not ensure an optimal energy efficiency of the system, as the energy efficiency of the pump or an electric motor is not equal to the energy efficiency of the whole system operation.

Typically, a pumping system has the best preconditions for operating energy efficiently when the losses are minimized. This may be obtained, for instance, by minimizing the flow resistance in a piping system by opening the control valves to their maximum and using the smallest pressure that satisfies the system requirements or selecting the rotational speed that results in the lowest specific energy consumption.

Pumping systems comprising several branches, wherein each branch comprises a control valve to control the amount of fluid flowing through the branch are known. It is also known that these systems work most energy efficiently when a control valve is opened completely, the pump pressure is controlled according to the flow rate through this valve, and the other valves control the flow rate through their respective branch according to the requirement of flow rate with throttling. However, this method requires valve setting or angle information to be retrievable from a control system or from a direct feedback from the valve. This requires additional instrumentation and wiring, increasing the system costs and providing a further source of failure, and in many cases, as in connection with a thermostat-controlled radiator based heating system for example, this information is not available in the first place.

It is also known to minimize the pump pressure requirement by constantly changing a proportional pressure curve used in the control of the pump rotational speed, wherein the selection of the control curve is based on hydraulic conductivity and its saturation. The hydraulic conductivity is then calculated from a measured pump pressure and flow rate and the saturation is monitored. In this method, a lower proportional pressure curve is selected if the time distribution of the hydraulic conductivity is for the most of the time below a time domain mean value, in other words saturated low, for example. Correspondingly, a higher proportional pressure curve is selected if the hydraulic conductivity is saturated high. In this method, the pump pressure is always above the minimal required pump pressure and, thus, hydraulic losses are not completely minimized, whereby no minimum energy consumption is reached.

### BRIEF DESCRIPTION

An object of the present invention is thus to provide a new method and a new arrangement for controlling pump systems. The objects of the invention are achieved by a method and an arrangement characterized by what is stated in the independent claims. Preferred embodiments of the invention are disclosed in the dependent claims.

The invention is based on the idea of utilising known and/or determined pump characteristics and easily determined pressure and/or rotational speed of the pump and flow rate information to find and control a pump pressure setting that optimises the energy efficiency of the system.

An advantage of the method and arrangement of the invention is that the efficiency of pumping systems comprising two or more branches, each comprising an independently adjustable control element, can be significantly improved with no need for information about valve settings or angles. Thus, additional instrumentation and wiring can be avoided.

### BRIEF DESCRIPTION OF THE DRAWINGS

In the following, the invention will be described in greater detail by means of preferred embodiments and with reference to the accompanying drawings, in which
Figure 1 schematically illustrates a pump system;
Figure 2 schematically illustrates a method of controlling a pump;
Figure 3 schematically illustrates an embodiment of a method of controlling a pump system as a flow chart;
Figures 4a and 4b illustrate pump characteristic curves;
Figure 5 schematically illustrates a block set diagram of the pump system control according to an embodiment;
Figure 6 schematically illustrates an arrangement for pump system control;
Figure 7 schematically illustrates an example of a rotational speed, total flow rate and pressure in connection with a use case of pump system control; and
Figure 8 schematically illustrates a further method of controlling a pump.

### DETAILED DESCRIPTION OF THE INVENTION

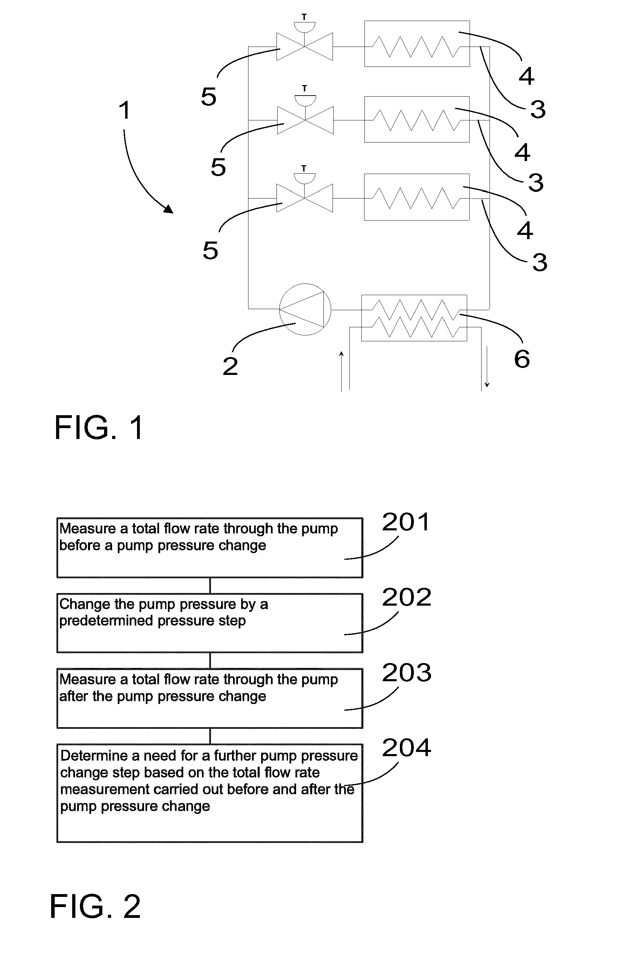

Figure 1 schematically illustrates a pump system. The pump system comprises a pump 2 and at least two branches 3. In the embodiment of Figure 1, the pump system 1 comprises three branches 3. Each of the branches may comprise a flow control element 5, and pump control means (not shown), such as a variable speed drive, a variable frequency drive, an inlet vane guide and/or a control element, may be provided in connection with the pump 2.

In the embodiment of Figure 1, the pump system 1 comprises a heating system, wherein each of the branches 3 comprises a load element 4, more particularly a heating element, and a flow control element 5, more particularly a thermostat. The pump system also comprises a thermal transfer element 6. This embodiment is shown as an example only and it is clear to a person skilled in the art that the configuration of the pump system may vary in different embodiments within in the scope of the claims.

Figure 2 schematically illustrates a method of controlling a pump. In this method, a total flow rate through the pump is measured 201 before a pump pressure change, the pump pressure is changed 202 by a predetermined pressure step, a total flow rate through the pump is measured 203 after the pump pressure change, and a need for a further pump pressure change step is determined 204 on the basis of the total flow rate measurement carried out before and after the pump pressure change.

According to an embodiment, a new pressure change step is only to be started once a sufficient time has elapsed since the previous pressure change step to enable the pump system to reach a steady state again. This time interval for starting a new pressure change step is now called an execution time interval and it should be defined separately for each system and embodiment since because it depends on the embodiment and system size, it may range from seconds to several minutes or even to several hours in some embodiments, for example.

According to an embodiment, a settling time, in other words the time for the pump system to reach a steady state, may be determined with a step response test. In such a test, a pressure that is known to be sufficient to satisfy the system demand is preferably used at the start. Then the pressure may be increased in a step-wise manner. As the control elements reduce the flow rate to the same flow rate as that acquired with the previous pressure, an estimate of the settling time can be calculated from the time domain change of the total flow rate. First, a pressure step may be introduced in to the system, causing a step-wise increase in the rotational speed and flow rate of the pump. When the control elements begin to react to this pressure change by closing control valves, for example, in each branch to keep a constant flow rate, the pump rotational speed begins to decrease, as less rotational speed is needed to maintain the new pressure reference. Thus, the settling time of the constant pressure control in connection with the individual branch flow rate control elements is found and may be used as an execution time interval in the control method of the present solution as such or as a basis for the determination of the execution time interval. Typically, the settling time is determined as the time from the start of the step, in other words the pressure or rotational speed change, to the moment of time when the flow rate (estimate) has reached a value within 2 per cent of its final value. It should be noted that the settling time may vary according to the system operating point, meaning for example that the settling time at lower total flow rates may differ from the settling time at higher total flow rates.

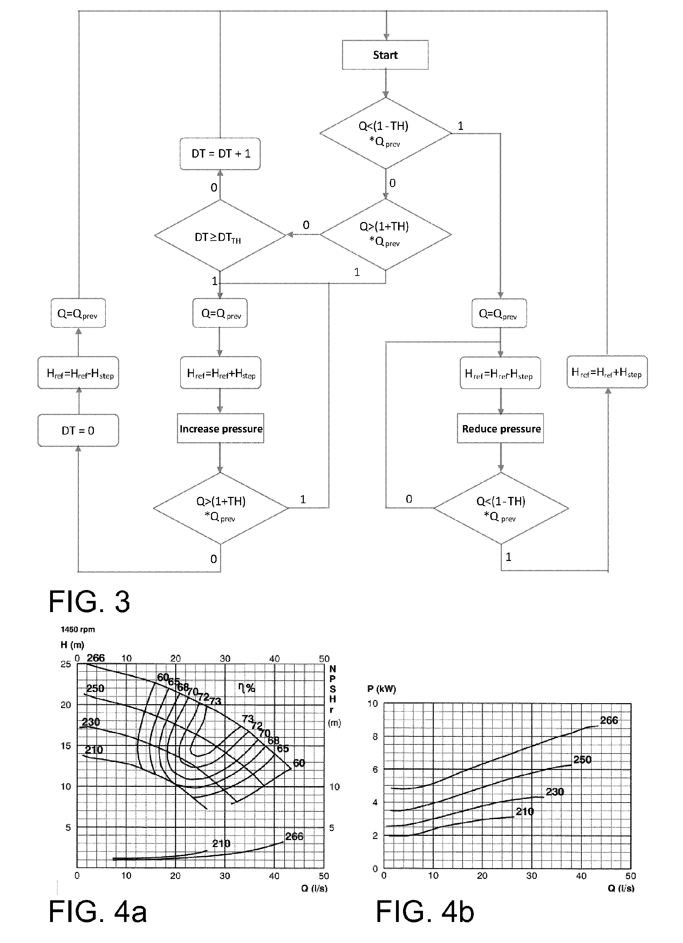

Figure 3 schematically illustrates an embodiment of a method of controlling a pump system as a flow chart. This embodiment implements a control algorithm according to an embodiment of the present solution. According to this embodiment, the pump may be controlled to a steady state by controlling the pump pressure, which is called a pressure reference H_{ref} in Figure 3. The total flow rate Q may be measured and compared with a flow rate change threshold value. A pressure change may be introduced in response to the total flow rate exceeding the threshold value or a dead time threshold being reached.

In Figure 3, DT refers to dead time loop index, DT_{TH} refers to a dead time threshold in loops to check the sufficiency of the pump pressure, Hₛₜₑₚ refers to a pressure change step, H_{ref} refers to a pressure reference, Q refers to a total flow rate, Qₚᵣₑᵥ refers to a total flow rate of the previous loop, and TH refers to a threshold for the flow rate as a relative value from 0 to 1.

According to an embodiment, a need for a pressure change may be determined in response to detection of a reduced flow rate. The current flow rate may then be saved as Qₚᵣₑᵥ and the pressure reference may be lowered by a predetermined pressure change step of the amount of Hₛₜₑₚ. The current pump flow rate Q, which can be measured when the system has again reached a steady state after the pressure change, may then be compared with the previous flow rate Qₚᵣₑᵥ according to the threshold criterion TH. In other words, it is checked whether the pressure change has caused a change in the total flow rate that exceeds the relative threshold value. These steps may be repeated to reduce the pump pressure in a step-wise manner until the pressure change results in a reduction in the flow rate. In other words, the pump pressure may be changed by a predetermined pressure step until a substantial change between a current pump flow rate Q and the previous total flow rate Qₚᵣₑᵥ is detected. The change is considered substantial when the relative threshold has been exceeded. When this happens, it indicates that at that point the current pressure is lower than the lowest pressure that satisfies the demand. Thus, the pump may be returned to the previous pump pressure value that is the pressure before the latest pressure changing step. Thus, an optimal pump pressure for the pump system in current operating conditions has been found and set and no further pressure change is needed until otherwise indicated. In Figure 3, this branch or state is called Reduce pressure.

According to an embodiment, a need for a pressure change may be determined in response to detection of an increase in the total flow rate above the threshold value. Thus, the algorithm proceeds to the state called Increase pressure. In this state, the pressure is increased step-wise until the total flow rate does not increase. At this point it is known that the previous pressure is the lowest pressure that satisfies the demand and it is used as the pressure reference. In Figure 3, this branch or state is called Increase pressure.

According to an embodiment, the pump system may be configured to initiate a change in the pump pressure at predetermined time intervals equal to dead time threshold DT_{TH}. In other words, a need for a pressure change may be determined in response to a time interval equal to dead time threshold having elapsed since a previous pump pressure change, when no recognizable change has been detected total flow rate during the time interval. Preferably, this pressure change comprises increasing the pressure. This enables a sufficient pressure to be provided in a branch in which a valve has been fully opened because of an earlier pressure reduction, since at that point it cannot be known whether that particular branch requires more flow. A sufficient pressure in each of the branches can be ensured by testing regularly that the pressure remains at the required level in a manner similar to that disclosed above in connection with other embodiments. The dead time threshold should be greater than the execution time interval. According to an embodiment, the dead time threshold is equal to a multiple of the execution time interval.

An advantage of the present solution is that no additional instrumentation is needed, since model-based solutions can be used for the estimation of the flow rate and pressure of the pump. A sensorless implementation can be based on model-based pump operating point estimation methods known per se. These estimation methods may comprise using pump characteristic curves, such as the examples illustrated in Figures 4a and 4b, affinity laws known per se as a model of the pump, and frequency converter estimates of the motor rotational speed and shaft power as inputs. The characteristics and general performance of a centrifugal pump, for example, can be visualized by characteristic curves for the pressure or head H, shaft power consumption P and efficiency η as a function of the flow rate Q at a constant rotational speed. The best efficiency point (BEP) of a centrifugal pump, in which the pump should be typically driven, is typically also provided by the pump manufacturer.

A frequency-converter-driven pump, for example, can be operated at various rotational speeds and, thus, the pump characteristic curves need to be converted into the current rotational speed. This can be performed on the basis of flow rate, pump pressure, pump shaft power consumption and rotational speed utilizing affinity laws known per se. The pump characteristic curves enable the sensorless estimation of the pump operating point location and efficiency by utilizing the rotational speed and shaft torque estimates (*n*ₑₛₜ and *T*ₑₛₜ, respectively) available from a frequency converter in a manner known per se.

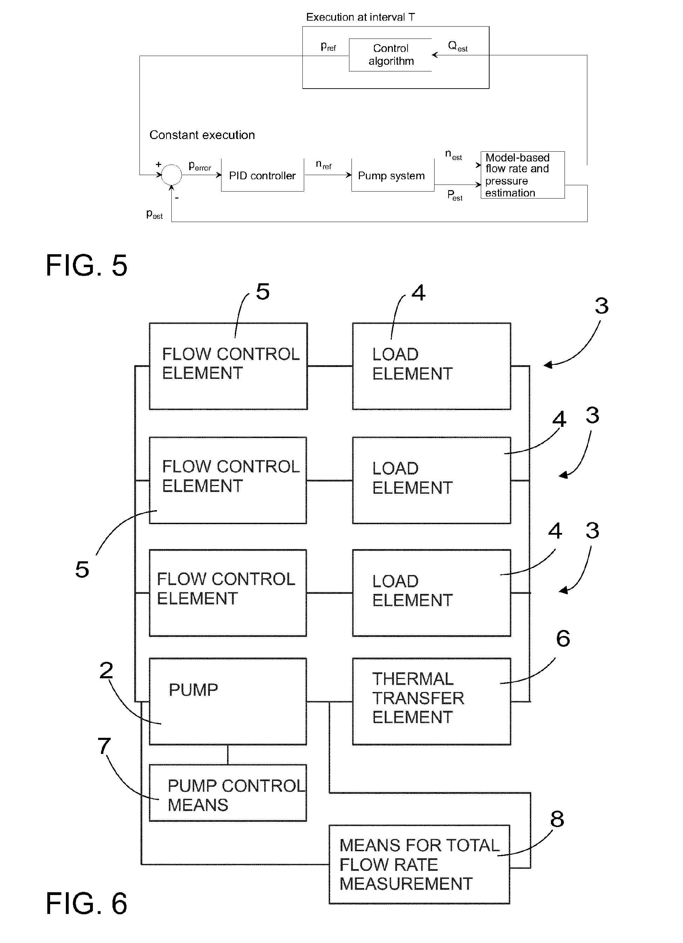

Figure 5 schematically illustrates a block set diagram of the pump system control according to an embodiment of the present solution. In the illustrated control system, a control algorithm is executed at an execution time interval T. The execution time interval is preferably equal to or longer than the time needed for the pump system to reach a steady state after a previous pressure change. In other words, the execution time interval is preferably equal to or longer than the settling time. In the embodiment of Figure 5, the pump is constant pressure controlled during the operation. The constant pressure control may be executed constantly to ensure a constant pressure of the pump such that an effect of an individual branch flow control element does not affect the pump pressure.

According to an embodiment, this constant pressure control can be achieved by a sensorless model-based operating point estimation method as presented in Figure 5. In such a method, an error between a desired and the estimated pressure may be calculated and inputted to a PID controller. The PID controller may calculate a new rotational speed reference for the pumping system. The frequency converter may then adjust the rotational speed and estimate the power, which may then be used to estimate the produced pressure and flow rate. The flow rate estimate can be used in the algorithm and the pressure estimate for control purposes in the constant pressure control as explained above.

According to an embodiment, the size of the predetermined pressure step or the step-wise change of the pressure reference Hₛₜₑₚ is related to the flow rate threshold TH. The flow rate threshold may be used to determine whether the total flow rate in the system has remained unchanged regardless of the change in the pressure. The pressure change step should preferably be selected to be such that it is able to produce a notable change in the system total flow rate.

Figure 6 schematically illustrates an arrangement for pump system control. The pump system may comprise a pump 2 and at least two branches 3 (three branches in the embodiment of Figure 6), wherein each of the branches comprises a flow control element 5. A flow control element may comprise a flow control valve, for example. According to an embodiment, the flow control element comprises a thermostat.

A control arrangement for a pump system may comprise pump control means 7 and means for measuring a total flow rate through a pump 8. The pump control means may comprise a frequency converter and/or a control unit, for example. Such frequency converters and control units are known per se. In different embodiments, these means may be arranged separately or some or all of the means may be integrated in the pump. The means for measuring the total flow rate may comprise at least one sensor and/or control element, for example. Such sensors and control elements are known as such and in some embodiments a common control element may be used for both the pressure control and flow rate measurement.

The pump control means may be configured to change the pump pressure by a predetermined pressure step and the means for measuring the total flow rate may be configured to measure the total flow rate before the pump pressure change and after the pump pressure change. The pump control means may then further be configured to determine a need for a further pump pressure change step on the basis of said total flow rate measurements before and after the pump pressure change. The pump 2 may comprise a pump, a fan or a compressor. The pump system and/or the control arrangement may be used to implement one or more of the methods disclosed in this description or a combination thereof.

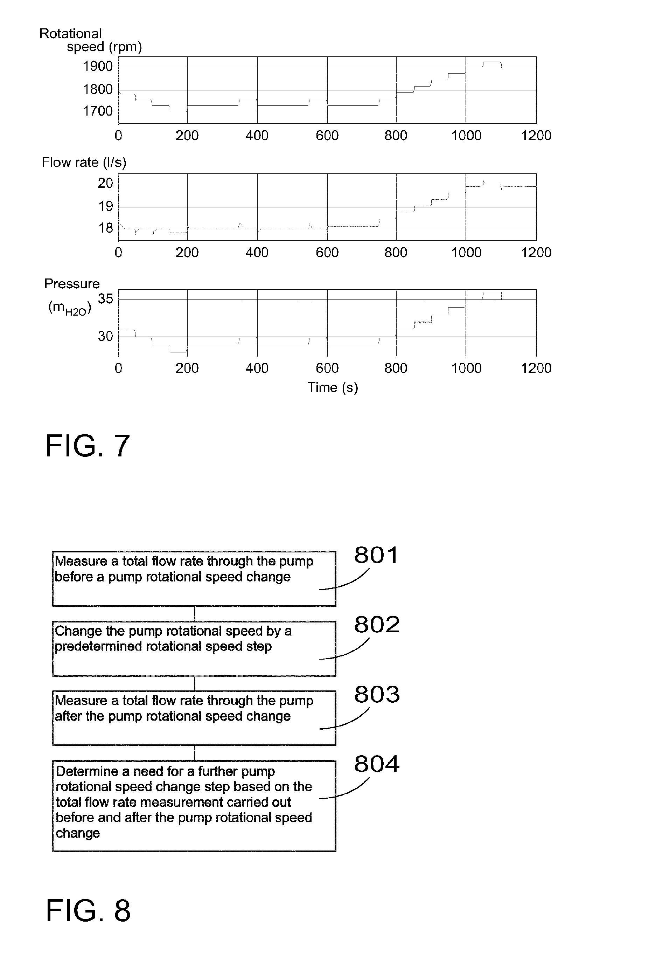

An example of a rotational speed, total flow rate and pressure in connection with a use case of pump system control is illustrated in Figure 7. The pump system may comprise a three-branch pump system, wherein each of the branches comprises an independent flow control element, such as a flow controlling valve, such as the embodiment of Figure 1. In Figure 7, the graphs start with the setup, in which the control valves are partially closed, the pump system is in balance and the execution time interval T is set at 50 seconds. A step-wise change in the flow rate requirement for a single branch occurs starting at the time instant of 600 s as a result of a change in the system requirements. The dead time threshold DT_{TH} has been set to be 150 s.

As the initial pressure has been found to be sufficient for the system, the system starts to change the pump pressure step-wise by a pressure change step. Between time instants of 0 to 200 seconds, the pressure reduces step by step. Between time instants of 0 to 150 seconds, the total flow rate remains approximately the same, as the system has reached a steady state. However, at time instants of 150 to 200 seconds, the total flow rate is notably reduced because of an insufficient pressure. Therefore, at 200 seconds the pressure is increased back to a sufficient level. This means that the lowest pressure for the system is found.

At time instants of 350 seconds and 550 seconds, on the basis of the dead time loop index, the algorithm checks whether a pressure increase is required, but since the total flow rate stays approximately the same despite the pressure increase, the pressure is not increased permanently. However, at 750 seconds the flow rate increases significantly when the pressure is increased, meaning that a higher pressure reference is required to satisfy the demand. The pressure is increased until the increase in the pressure does not increase the flow rate significantly. Again, the lowest pressure satisfying the demand is found.

Preferably, the system withstands some transients in the pressure and hence in the flow rate. Also, the system preferably withstands a certain amount of inaccuracy in the flow rate. Preferably, the settling time of the individual flow rate controls and pressure control should be faster than the change in the flow rate reference, whereby the flow rate demand would stay approximately constant during the pressure stepping.

Figure 8 schematically illustrates a further method of controlling a pump. In this method a total flow rate through the pump is measured 801 before a pump rotational speed change, the pump rotational speed is changed 802 by a predetermined rotational speed step, a total flow rate through the pump is measured 803 after the pump rotational speed change, and a need for a further pump rotational speed change step is determined 804 on the basis of the total flow rate measurement carried out before and after the pump rotational speed change. This embodiment may be similar to any one or any combination of the embodiments explained in connection with the control based on a pump pressure change in other respects, but instead of pressure change steps, the rotational speed change steps are used.

Similarly, any control arrangement explained in connection with the embodiments comprising a pressure change step may be used in connection with a rotational speed change step as long as the pump control means may be configured to change the rotational speed of the pump.

According to an embodiment, a new rotational speed change step is only to be started once a sufficient time has elapsed since the previous rotational speed change step to enable the pump system to reach a steady state again. This time may also be called an execution time interval and it should be defined separately for each system and embodiment since because it depends on the embodiment and system size, it may range from seconds to several minutes or even to several hours in some embodiments, for example.

In different embodiments, the pump system may comprise a pump, a fan or a compressor system or a combination thereof, wherein individual branch flow control elements are provided as long as allowed by the device and system characteristics. Correspondingly, the pump may comprise a pump, a fan or a compressor.

According to an embodiment, the current solution may be used in combination with the known solution of throttle control, when the system comprises information on the valve setting of critical branches in the system. A combination of the both control methods provides an even more precise flow control, which may be particularly beneficial in some applications. In such a case, the methods may be combined, which leads to a situation where any system having flow rate control in a branch, whether it be known or unknown, can be optimized. In such embodiments, additional sensors, such as pressure or flow rate sensors, may be provided for further improving the estimation accuracy of the model-based solutions in particular, thus also improving the operation of the present solutions.

According to the present solution, the required pressure of a pumping system and, thus, the dynamic flow losses of the system that has individual flow control elements in each branch can be reduced. The reduction in the flow resistances and the lower pressure lead to a better energy efficiency. The implementation of the solution can be mainly carried out based on the model of the pump with very little additional information needed. No information about the individual control elements is required, contrary to known solutions. On the other hand, the solution can be used along with the known solutions to ensure a pressure optimum in even more critical applications.

It will be obvious to a person skilled in the art that, as technology advances, the inventive concept can be implemented in various ways. The invention and its embodiments are not limited to the examples described above but may vary within the scope of the claims.

## Claims

1. A method of controlling a pump system comprising a pump and at least two branches, wherein each of the branches comprises a flow control element, and pump control means are provided in connection with the pump,
**characterized by**
measuring a total flow rate through the pump before a pump pressure or rotational speed change,
changing at least one of the following: the pump pressure by a predetermined pressure step or the pump rotational speed by a predetermined rotational speed step,
measuring a total flow rate through the pump after the pump pressure or rotational speed change, and
determining a need for a further pump pressure or rotational speed change step on the basis of the total flow rate measurement carried out before and after the pump pressure or rotational speed change.

2. A method according to claim 1, wherein changing the pump pressure by a predetermined pressure step comprises lowering the pump pressure by a predetermined pressure step.

3. A method according to claim 1 or 2, wherein the method comprises changing the pump pressure by lowering the pump pressure by a further predetermined pressure step in response to a total flow rate measurement value after the previous pump pressure change is substantially the same as a total flow rate measurement value before the previous pump pressure change.

4. A method according to claim 2 or 3, wherein a need for a pressure change is determined in response to detection of a reduced total flow rate.

5. A method according to claim 1, wherein changing the pump pressure by a predetermined pressure step comprises increasing the pump pressure by a predetermined pressure step.

6. A method according to claim 1 or 5, wherein a need for a pressure change is determined in response to detection of an increase in the total flow rate above a predetermined threshold value.

7. A method according to any one of the preceding claims, wherein a further pressure change step is started in response to a time interval equal to a predetermined dead time threshold having elapsed since a previous pressure change step, wherein no recognizable pressure change has been detected.

8. A method according to claim 7, wherein a settling time is determined with a step response test, wherein a pressure known to be sufficient to satisfy a system pressure demand is increased in a step-wise manner and the settling time is determined on the basis of flow rate and pump rotational speed measurements.

9. A method according to claim 8, wherein the pump is constant pressure controlled during operation.

10. A method according to any one of the preceding claims, wherein the pump system comprises a pump system, a fan system or a compressor system.

11. A method according to any one of the preceding claims, wherein the method further comprises controlling the pump system on the basis of at least one of the following: control element valve settings and control element angle settings.

12. A control arrangement for a pump system comprising a pump and at least two branches, wherein each of the branches comprises a flow control element, wherein the control arrangement comprises means for measuring a total flow rate through the pump and pump control means, **characterized in that**
the pump control means are configured to change at least one of the following by a predetermined step: pump pressure or pump rotational speed,
the means for measuring the total flow rate are configured to measure the total flow rate before the pump pressure or rotational speed change and after the pump pressure or rotational speed change, and wherein
the pump control means are further configured to determine a need for a further pump pressure or rotational speed change step on the basis of said total flow rate measurements before and after the pump pressure or rotational speed change.

13. A control arrangement according to claim 12, further comprising additional sensors for detecting valve settings and angles of the flow control elements.

14. A pump system comprising a pump, at least two branches, each comprising at least a flow control element, and a control arrangement according to claim 12 or 13.

15. A pump system according to claim 14, wherein the pump comprises a pump, a fan or a compressor.
